Europäisches Patentamt

(19) European Patent Office

Office européen des brevets

(11) **EP 0 768 040 B1**

(12) **EUROPEAN PATENT SPECIFICATION**

(45) Date of publication and mention
of the grant of the patent:
**15.12.1999 Bulletin 1999/50**

(51) Int. Cl.$^6$: **A23K 1/14**, A23L 1/212

(21) Application number: **96610041.4**

(22) Date of filing: **16.10.1996**

(54) **Preserved feeding/food stuff, a method of preparing it and the use thereof**

Konserviertes Futter/Lebensmittel, Verfahren zu seiner Herstellung und dessen Verwendung

Nourriture/Alimentation conservée, procédé de sa préparation et son utilisation

(84) Designated Contracting States:
**DE DK ES FR NL**

(30) Priority: **16.10.1995 DK 116395**

(43) Date of publication of application:
**16.04.1997 Bulletin 1997/16**

(73) Proprietor:
**Haaber Consult v/cand. agro. Johnny Haaber
2300 Kobenhavn S (DK)**

(72) Inventor: **Haaber, Johnny
2300 Kobenhavn S (DK)**

(74) Representative:
**Hegner, Anette et al
Hofman-Bang & Boutard,
Lehmann & Ree A/S
Hans Bekkevolds Allé 7
2900 Hellerup (DK)**

(56) References cited:
**US-A- 5 264 231**

• **Dialog Information Service, File 50, CAB
Abstracts, Dialog accession no. 03027028, CAB
accession no. 951406783, Fraga, L.M. et al.: "The
utilization of quinoa (Chenopodium quinoa W)
forage in diets for broilers", Cuban Journal of
Agricultural Science, 1993, vol. 27 (3), p. 329 -
333**
• **BIOAVAILABILITY '93 Nnutritional, chemical and
food processing implications of nutrient
availability. Proceedings Part 1, J. Ruales et al.
"Bioavailability of protein and starch in
processed quinoa (Chinopodium quinoa, Willd)
samples. In-vitro study" p. 88 - 92**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a preserved animal feeding stuff e.g. in the form of green meal, pellets, briquettes or cobs, a method of preparing a food stuff and a use of this food stuff.

A large amount of the feeding stuff used in animal farming is or comprises preserved food plants. It is therefore very important that the nutritive content of this preserved animal feeding stuff is high. The need of nutrient differs a lot from one animal to another. For instance are ruminants need for proteins, carbohydrates, fat, fibres and others very different from monogastric animals needs for proteins, carbohydrates, fat, fibres and others. Further, the quality of the flesh, milk, eggs and other products from the animals depend on the nutritive value of the feeding stuff.

It is therefore very important that there exists a large number of preserved animal feeding stuffs with different nutritive content enabling the farmer or the feeding stuff industry to make feeding stuff compositions with optimised feeding value for different kinds of animals.

One of the major sources of animal feeding stuff is dried green vegetable matter e.g. dried vetch, clover, lupin, sanfoin, alfalfa and grass. Particularly dried grass and alfalfa are used as feeding stuff, primarily because these plants bring a high dry matter yield and have an acceptable content of proteins and are cheap compared to other feeding plants.

It is also important that grass and alfalfa can be grown in most of the growth season ranging from the end of may to the beginning of November.

However, there is still a need for other vegetable feeding stuffs, particularly with different nutritive contents than the known preserved vegetable feeding stuffs, which feeding stuffs can be used as a replacement or supplement for the known preserved vegetable feeding stuffs.

Particularly there is a need for an animal feeding stuff which is cheap, and which can be cultivated and harvested in European fields in ordinary summer periods, and an animal feeding stuff which has a high feeding value and which can be produced by using the existing equipment used for producing the known dried green vegetables such as dried grass.

The object of the present invention is to provide an animal feeding stuff which satisfies the above needs. This object is met with the animal feeding stuff as defined in claim 1.

The term "greenmatter" denotes the biomass from the plant obtained without sorting. This means that the greenmatter comprises the whole plant, namely the stem, the leaves and optionally flowers and grains, depending on the stage of development at the time of harvesting.

The preserved feeding stuff of the invention may comprise a mixture of dried greenmatter of the vegetative plant parts of the species Chenopodium quinoa and other dried animal fodder such as dried grass, alfalfa or other animal fodder having a low content of water such as the animal fodder listed in "tabeller over foderstoffers sammensætning m.m. Kvæg-Svin" by Preben E Andersen and Arnold Just. Printed by DSR Forlag, The Royal Veterinary-and Agricultural University Copenhagen, 1990. pp 1-87. The preserved feeding stuff of the invention preferably comprises at least 10%, more preferably at least 30%, more preferably at least 55% and even more preferably at least 80% by weight of dried greenmatter of the vegetative plant parts of the species Chenopodium quinoa.

The dried greenmatter of the preserved feeding stuff according to the invention preferably has a water content of less than 20%, preferably less than 15% and more preferably less than 10% by weight.

The plant "Chenopodium quinoa", in the following referred to as "quinoa", is known to be a very ancient crop plant, which in pre-Columbian time ensured survival of several thousand natives in the old empire of the Incas. Quinoa is still cultivated as a stable crop at high altitudes, where seeds make a significant contribution to local food production in countries such as Ecuador, Peru and Bolivia with purposes similar to those of barley in Europe. When the seeds have been harvested from the mature quinoa plants, the haulm is used as feed mainly to the llamas.

Bioavailability '93 nutritional, chemical and food processing implications of nutrient availability. Proceedings Part 1, J. Ruales et al. "Bioavailability of protein and starch in processed quinoa (Chinopodium quinoa, Wild) samples. In-vitro study" p.88-92 discloses a food material for children and its use in infant food. This material comprises Chenopodium quinoa flour drumdried at a temperature of about 144 °C, wherein said flour is made from whole quinoa seeds.

US 5,264,231 discloses a food source as a binder in soups or cooked dishes, wherein said source is made from dried whole quinoa seeds.

Also leaves of quinoa have been used in human nutrition. In "The Chenopodium Grains of the Andes: Inca Crops for Modern Agriculture" (1984) ADV. Applied Biology, Vol. 10, pp 145-216, by J. Risi C. et al. it is mentioned that the fresh leaves of quinoa have been used like spinach.

Furthermore, Cuban Journal of Agricultural Science, 1993, vol. 27 (3), p.329-333 discloses a meal for feeding broilers, wherein said meal comprises sun-dried Chenopodium quinoa forage.

The drawback of quinoa is that the green plant contains bitter and soapy-tasting substances identified as saponins. Saponins are a class of natural detergents comprising hydrophilic sugar chains and a hydrophobic triterpenoid aglycone called sapogenols or sapogenous.

Saponins are characterised by being polar molecular built-up crystals held together by intermolecular forces. Molecular crystals, therefore, are soft and have low melting points, usually below 300 °C. In the quinoa branch scientists have found and isolated saponins having melting points in the range of 194 - 259 °C (Mizui et al., 1988, Saponins from Brans of Quinoa, *Chenopodium quinoa* Willd. I. Chemical and Pharmaceutical Bulletin, 36(4). pp. 1415-1418; Mizui et al., 1990, Saponins from Bran Of Quinoa, *Chenopodium quinoa* Willd. I. Chemical and Pharmaceutical Bulletin, 38, (2), pp. 375-377, and Ma et al., 1989, Additional toxic, bitter saponins from the seeds of *Chenopendium quinoa,* Journal of Natural Products, 52, (5), pp. 1132-1135).

Inclusion of certain saponins in feeds leads to reduced growth rates in animals, particularly in poultry and monogastric mammals such as pigs, possibly because the bitterness and the soapy taste of quinoa plant material reduce the palatability and thereby the feed intake. Therefore, to improve the palatability, it is necessary to eliminate or at least to reduce a substantially part of the saponins in the plant material.

The saponins are mainly present in the leaves and in the outer layer of the seeds of the quinoa plant. In the known use of quinoa in Ecuador, Peru and Bolivia, the seeds of quinoa are washed and/or soaked in water followed by cooking or sun drying to prevent fermentation or germination or the seeds are treated by eliminating the outer layers of the seeds. However, these methods for removal of saponins are very expensive and not suitable for industrial scale. It has been suggested to develop saponin free quinoa plants, however, the saponin plays an important role in the growth of the quinoa plants, because the saponin protects the plants against various diseases and pests as well as against bird attacks. In growing quinoa it is therefore an advantage that the plants contain saponins.

The feeding stuff of the invention, the dried greenmatter is substantially free of saponins, because the vegetative plant parts of quinoa have been subjected to a heat treatment under or after the drying, to a temperature above 700 °C, preferably above 800 °C and more preferably to a temperature of between 800 and 1200 °C, and most preferably to a temperature of between 800 and 1000 °C. The heat treatment eliminate or remove a substantially part of the saponins. The heat treatment as defined above should not be too long, as this will impair the nuitrive value of the greenmatter. Preferably, the greenmatter has been heat-treated for an average period of between 0.1 to 30 seconds, more preferably between 0.1 and 4 seconds, more preferably between 0.1 and 3 seconds and most preferably between 0.1 and 2.5 seconds.

The preserved feeding stuff of the invention may be in the form of comminuted greenmatter, preferably in the form of flour or pelletized flour or in the form of briquettes or cops.

In a preferred embodiment of the preserved feeding stuff according to the invention, the dried greenmatter is of Chenopodium quinoa harvested in the period from the stage of pre- flowering to the state of post-flowering or seed-setting. According to this preferred embodiment, a greenmatter with very good feeding value is obtained as explained later on.

The present invention also relates to a method of preparing a food stuff as defined in claim 8.

The method of preparing a preserved food stuff according to the invention, comprises the following steps:

      a) growing a plant of the species Chenopodium quinoa,
      b) harvesting the plant,
      c) drying the vegetative plant parts of the plant to obtain a dried greenmatter.

It should be understood that the vegetative plant parts of the quinoa plant are dried without being sorted prior to drying. In other words, the whole plants are dried e.g. after being cutted into smaller pieces, e.g. into pieces having a size of less than 70 mm, preferably between 1 and 50 mm, more preferably between 1 and 10 mm and most preferably between 3 and 7 mm. Depending on the time of harvest, the plant may comprise flowers or grains.

It is particularly preferred that the quinoa is harvested at an age of between 8 and 16 weeks from germination, preferably between the state of pre- flowering to the state of seed-setting. The quinoa seeds start to germinate a few hours after receiving moisture and the presence of the first tap root indicates the time of germination.

To obtain the quinoa plants in high yields and of a good quality with respect to the contents of protein, starch, sugar and other nutritious matter, the quinoa is grown in a row distance of between 10 and 50 cm, preferably between 20 and 40 cm, more preferably between 23 and 29 cm. Quinoa is preferably grown at a plant density in the range of 80 to 180 per m$^2$. In a very preferred embodiment, the quinoa crop is grown in a row distance of 26 cm and at a plant density in the range of 115 to 140 plants per m$^2$. Before sowing, which is recommended to take place from the beginning of May and to the middle of May, a basal dressing of phosphorus and potassium equivalent to 20 kg P$_2$O$_5$ (ha)$^{-1}$ and 80 kg K$_2$O (ha)$^{-1}$ may be applied with 60 kg N (ha)$^{-1}$ as a basic nitrous fertilizer. Four to five weeks after emergent, 240 kg N (ha)$^{-1}$ are admitted giving a total of 300 kg of nitrous fertilizer (ha)$^{-1}$. Quinoa prefers sandy soils. However, it can be grown in clay soils but a reduction in the dry matter yield may then be expected. Also dry matter yield may be affected in a negative way by cold weather and heavy draught weather conditions.

To ensure high dry matter yields of a high quality animal feed, the quinoa crop should be harvested at the stage of flowering or of post-flowering (seed-setting) stage. At these stages of development the crop has reached an age between 11 to 13 weeks. Dry matter yield would then, in a normal year in sandy soils, be in the range of 8,5 to 10,5 metric tons (ha)$^{-1}$.

Under or preferably before the drying step, the harvested quinoa plants (quinoa greenmatter) are preferably cut into smaller pieces. The vegetative plant parts may be comminuted by crushing or slicing to pieces having an average size of less than 70 mm, preferably between 1 and 50 mm, more preferably between 1 and 10 mm and most preferably between 3 and 7 mm. This comminuting may be carried out in any conventional cutting equipment such as cutting equipment ordinarily used for crushing or slicing grass and alfalfa.

The quinoa greenmatter may be dried by use of any conventional methods. The vegetative plant parts are preferably heat treated prior to under or after the drying step, more preferably heat treated as explained above to a temperature of between 700 and 1200 °C for an average period of between 0.1 to 30 seconds.

It is also preferred that the greenmatter is partly dewatered by mechanical means prior to the drying step. Such mechanical means may e.g. be squeezing, vibration, compression, vacuum, filtration or centrifuging of the greenmatter.

In a very preferred embodiment the vegetative plant parts are dried in a drum drier. The drum drier is preferably a continually drier type, having a high temperature inlet zone, a treatment zone and a outlet zone. The temperature in the inlet zone is 700 °C or more, so as to heat treat the greenmatter as explained above and thereby removing at least a substantially part of the saponins. The treatment zone may preferably have a temperature between 200 and 700 °C and the outlet zone may have a temperature of less than 200 °C. Such drum drier is known from the field of drum drying grass, alfalfa and other plants. The temperature and average retention time of the greenmatter in the inlet zone is preferably between 0,1 and 30 sec. as explained above in order to heat treat the greenmatter. The temperature and average retention time of the greenmatter in treatment and outlet zones may be adjusted depending on the water content in the greenmatter, the size of the particles in the greenmatter and other parameters so as to obtain a dry greenmatter having a water content below 20% by weight, preferably below 15% most preferably below 10% by weight. Preferably the total average retention time in the drum drier is 5 minutes or less. The dried product could be ground to a flour and/or be transformed either into pellets, briquettes or into cobs by using a hydraulic squeezer at high pressure. This kind of preservation of plant material is already known for species inside the families of grass *(Poaceae)* and pea *(Fabaceae)*.

The food stuff of the invention may be an animal feeding stuff.

The present invention also relates to the use of the preserved feeding stuff according to the invention as a feeding stuff for ruminants, particularly as a feeding stuff for cattle, as well as the use of the preserved feeding stuff according to the invention as a feeding stuff for monogastric mammals, particularly as a feeding stuff for poultrys or pigs. When used as a feeding stuff for monogastric mammals, the preserved feeding stuff according to the invention is preferably in the form of a mixture of dried greenmatter of quinoa and other dried animal fodder as explained above.

Further, the present invention relates to the preserved food stuff prepared according to any of claims 8 to 17 and the use of this preserved food stuff in human food.

The final dried greenmatter can be used instead of other vegetable proteins such as alfalfa proteins, grass proteins, soya proteins and rape proteins, etc., or animal proteins such as milk proteins and meat proteins.

Therefore, the final dried greenmatter can be used as a feedstuff for animals, in fermentation processes and in victuals, diet food, health food or food supplement to human beings.

The product according to the present invention being rich on proteins can, because of the nutritive value of said plant, be one of the ingredients in a mixture as explained above. Said mixture can be used for the same purpose as stated above, when the dried greenmatter is used instead of other vegetable proteins or animal proteins.

In the following and by use of examples and drawings the invention is explained in further detail.

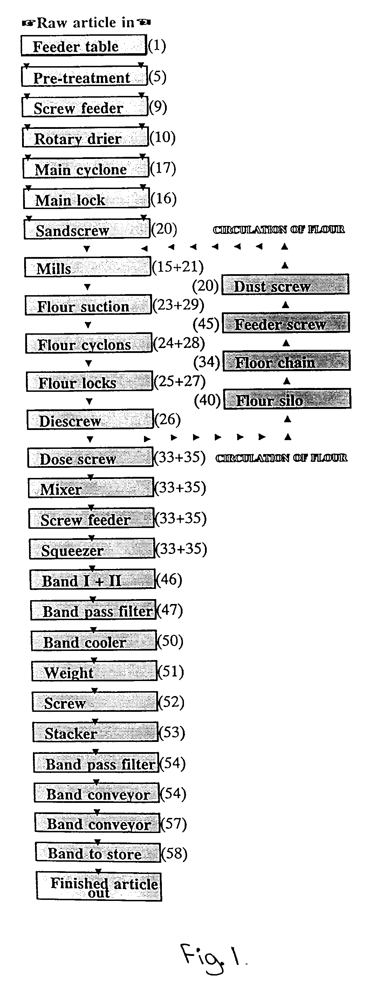

Fig. 1 is a view of a schematic example of a technical process in a drying and grinding plant.

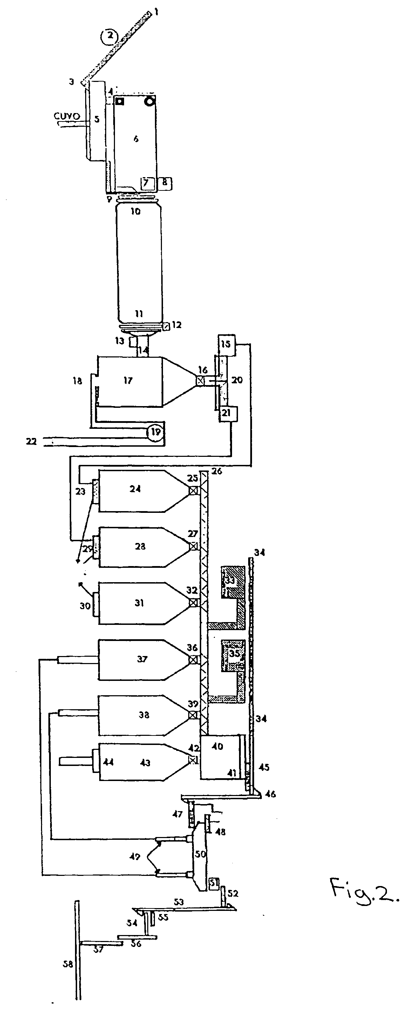

Fig. 2 is a view of a diagram of a technical process in a drying and grinding plant.

EXAMPLE 1.

Quinoa plants were grown near Aars in Denmark in 1994 on a sandy soil. The quinoa crop was grown in a row distance of about 26 cm and at a plant density of about 125 plants per m$^2$. The sowing took place in the beginning of May and potassium equivalent to 20 kg $P_2O_5$ (ha)$^{-1}$ and 80 kg $K_2O$ (ha)$^{-1}$ was applied with 60 kg N (ha)$^{-1}$ as a basic nitrous fertiliser. About five weeks after emergent, 240 kg N (ha)$^{-1}$ was applied, giving a total of 300 kg of nitrous fertiliser (ha)$^{-1}$. After 5 weeks the height of the plants was about 40 cm. The plants were harvested at 3 different stages, namely at the pre-flowering stage (crop age 9, 14 July 1994), at flowering stage (crop age 11, 28 July 1994) and at the post-flowering stage (crop age 13, 11 August 1994).

The plants were comminuted immediately after harvesting by being cut to pieces of an average size below 7 mm.

EXAMPLE 2.

The comminuted greenmatter was treated in a drum drier (20 T. Atlas 1-way drum drier) as explained in the following with references to the drawings.

The greenmatter was placed on the inlet table 1, where after the thickness of the layer is made uniform by a device 2. The green matter is introduced into a closed Cuvo system (band boiler) 5 of the Swiss Combi type, in which the green matter is sprayed with hot steam about or below 200 °C for 10 seconds.

The steam is recycled from the main cyclone 17 and passed further on by the main ventilator 19. The pre-heated (pre-boiled) green matter is passed through two rubber rollers which squeeze water and juice cut. Then, the squeezed material drops down into a feed worm 9, follow-ing which it is transported to the drying drum. Here, the material drops down into a 1,000 °C hot inlet zone 10 which is created via furnace temperatures of 1,285 °C (6). The 1,000 °C hot zone extends about 3 metres into the drying drum, which has a total length of 20 metres. The average retention time in the inlet zone is normally between 0.1 and 4 seconds. In this example the average retention time in the inlet zone is about 1.5 seconds. The temperature decreases gradually through the zone, and at the outlet the air temperature is about or below 200 °C (11). The flow inside the drum is created by the main ventilator 19, which draws in air through the air inlet 4 in the furnace 6. The density of the particles combined with the flow determines the retention time in the individual zones. The passage time through the drum may be varied, but usually takes between 2 and 6 minutes, the total average retention time being about 5 minutes in this example. After drying the material continues to the main cyclone 17, which in reality serves as a particle separator. Its function is to separate flue gases and steam and to suck off some of the heat from the treated green matter. The steam is sucked out by the main ventilator 19, and some of it is recycled (18) to the Cuvo 5. The rest of the steam is exhausted through the chimney 22. The green matter continues down to the bottom of the main cyclone, where it drops via the main gate 16 into fines worms 20, which transport the green matter to the two mills 15 (mill II) and 21 (mill I). Here, it is ground to flour. The flour is sucked by the flour suction means 23 (flour suction means II) and 29 (flour suction means I) into the flour cyclones 24 (flour cyclone II) and 28 (flour cyclone I). The flour is admitted via the flour gates 25 and 27 to the pressing worm 26, in which it is mixed with fines from the date 32 of the fines cyclone 31. Heat continues to be sucked out of the material during the transport in the pressing worm 26. This is done by means of the two cooling cyclones 37 and 38. If the pelleting presses 33 and 35 are overloaded, the pressing worm passes the flour to the flour silo 40, following which it is recycled. This means that it returns via a bottom chain 34 and a worm 45 to the mills, the flour cyclones, the flour gates and the pressing worm. If, in the meantime, the mills now have spare capacity, the flour continues through the normal process path. This means that a metering worm conveys the flour from the pressing worm to a mixer and a feed worm which feeds the pelleting presses 33 and 35.

After pressing, the pellets pass a band screen 47 and then drop down on the band cooler 50. Fines, if any, from the band ccoler are conveyed by a fines worm 48 to the fines cyclone 31. At the end of the band cooler the pellets are weighed (51) and passed by a worm 52 to the elevator 53. At the transition of the elevator 53 to the redler 57 (II), it first has to pass a redler 53 (I), which is a screen redler. Fines from this are transported via a worm 55 to the fines cyclone 31. After the redler 57 (II) has carried the pellets up to a height of about 18 metres, which is the ceiling and storage height, the finished pellets are transported by a rubber belt 58 for storage.

Dust is collected by suction throughout the production plant. The dust ends in the filter 43, whose gate 42 is in direct connection with the flour silo 40. From there, the dust and the flour are recycled again.

The dried greenmatter was analyzed. The chemical contents are listed in table 1. It should be noted that the high quality of dry matter principally is ensured by the contribution of leaves and inflorescences. They make a total share of about 55% of the biomass harvested.

TABLE 1

| Composition of the chemical content in organic dry matter. | |
|---|---|
| Analyses: | Composition in % of ODM: |
| Dry matter | 91.0 - 95.0 |
| Raw protein | 19.0 - 26.0 |
| Raw fat: | 2.0 - 5.0 |
| Tannins | 1.1 - 1.3 |
| Raw carbohydrate: | 69.0 - 79.0 |

TABLE 1 (continued)

| Composition of the chemical content in organic dry matter. | |
|---|---|
| Analyses: | Composition in % of ODM: |
| Fibre | 26.0 - 30.0 |
| Nitrogen Free Extractsolids | 43.0 - 49.0 |
| LHC (sugar + starch) | 5.0 - 16.0 |
| Cell Content | 50.0 - 57.0 |
| Neutral Detergent Fibre | 43.0 - 50.0 |
| Acid Detergent Fibre | 28.0 - 33.0 |
| Soluble Wall Content | 15.0 - 18.0 |
| Raw ash | 12.0 - 15.0 |

Chemical analyses:

Chemical analyses of the dried product, both in terms of percent dry matter (DM) and percent organic dry matter (ODM) are presented in Table 2. The dry matter content of the dried product was 94.20% by weight (9 weeks), 93.10% by weight (11 weeks) and 95.10% by weight (13 weeks), respectively, the organic dry matter content of the dried product was 85.60% by weight (9 weeks), 86.30% by weight (11 weeks) and 87.60% by weight (13 weeks), respectively. The reason for calculating ODM is that the high content of raw ash can mask the true nutritive value of the manufactured fodder. In an average year the raw protein content would be in the range of 19-26% by weight of ODM (Table 1) for crops of the same age. Because of the severe drought of 1994 raw protein content in quinoa ODM was at the lower end of this range (Table 2). This meant that only half of the nitrogen applied was actually utilised by the plants. Based on 1994, yet no conclusion can be made regarding the drought tolerance of quinoa for dry matter production. Therefore, irrigation may improve the production under Danish conditions with respect to high yields of good quality animal feed or food stuff.

The raw fat fraction seemed to be more or less constant in the period examined. Within this fraction, however, it can be seen that the tannin content decreases with age (Table 2). This is not surprising, because most of the tannins are located in the leaves and leaf loss increases with time.

The raw carbohydrate fraction of the dried product (Table 2) has a composition similar to that of the legumes yellow lupin, vetch and clover at all three harvests (Table 4). As expected, it was noted that the fibre content in ODM increases with age.

Contrary to expectations it was noted that cell content (CC) increases with age. This could be due to the fact that the crop was irrigated in the middle of July with 40 mm of water. This resulted in new growth as evidenced by the decreased content of neutral detergent fibre (NDF) and a more pronounced decrease in content of acid detergent fibre (ADF). Therefore, soluble wall content (SWC) or digestible cell wall decreases as a natural consequence of the fact that the difference between NDF and ADF is narrowed (Table 2).

TABLE 2

| Chemical content of the dried product at different harvest times. | | | | | | |
|---|---|---|---|---|---|---|
| HARVEST TIME: | Crop age 9 | | Crop age 11 | | Crop age 13 | |
| ANALYSES: | DM[1] | ODM[2] | DM[1] | ODM[2] | DM[1] | ODM[2] |
| Raw Ash | 14.40 | 0.00 | 13.70 | 0.00 | 12.40 | 0.00 |
| Raw fat | 3.69 | 4.31 | 3.96 | 4.59 | 3.69 | 4.21 |
| Tannins | 1.12 | 1.31 | 1.10 | 1.28 | 1.00 | 1.14 |
| Raw protein | 17.63 | 20.60 | 17.17 | 19.90 | 15.86 | 18.10 |
| Raw carbohydrate. | 64.28 | 75.09 | 65.17 | 75.51 | 68.05 | 77.69 |
| Fibre | 25.08 | 20.30 | 23.04 | 26.70 | 24.35 | 27.80 |
| Nitrogen Free Ex.so | 39.20 | 45.79 | 42.13 | 48.81 | 43.70 | 49.89 |
| Light Hydroly. | 4.60 | 5.37 | 9.33 | 10.81 | 13.97 | 15.95 |
| Sugar | 3.88 | 4.53 | 6.06 | 7.02 | 6.14 | 7.01 |
| Starch | 0.72 | 0.84 | 3.27 | 3.79 | 7.83 | 8.94 |
| Neutr. Deterg. Fibre | 42.63 | 49.80 | 37.54 | 43.50 | 39.42 | 45.00 |
| Soluble Wall Conte. | 14.64 | 17.10 | 11.39 | 13.20 | 14.37 | 16.40 |
| Acid Deterg. Fibre | 27.99 | 32.70 | 26.15 | 30.30 | 25.05 | 28.60 |
| Cellulose | 22.02 | 25.72 | 18.84 | 21.83 | 19.99 | 22.82 |
| Lignin | 5.97 | 6.98 | 7.31 | 8.47 | 5.06 | 5.78 |
| Cell Content | 57.37 | 50.20 | 62.46 | 56.50 | 60.58 | 55.00 |

[1] All figures are in percent of kg dry matter (DM);
[2] all figures are in percent of kg organic dry matter (ODM).

The development of the light hydrolyzable carbohydrates (LHC) is closely correlated with crop age (Table 2). At crop age 9 the LHC content is 5.37% by weight of ODM, increasing to 15.95% by weight at crop age 13. As the majority of the plants are setting seed at this stage, this would indicate that it is the seeds which contribute to this increase in LHC content. But the distribution between sugar and starch which constitute the LHC fraction changes with time. In fresh quinoa sugar contributes 95% by weight of the LHC at crop age 9, declining to 54% by weight at crop age 13 (Table 3).

Starch content goes in the opposite direction, however, due to the development of seeds. This may be the explanation for the high feeding value of the manufactured product to poultry which increases with age when compared with other rotary dried products such as alfalfa green meal and green meal in general (Table 5).

Today only limited quantities (3% by weight) of traditional green meal are added to the diets of laying hens and rearing hens. Traditional green meal is rarely used for chickens, mainly because of lack of starch and a fairly high content of fibers. Laying hens receive only sufficient green meal in their diet to give the egg yolk a more intense colour.

In Table 5 the feeding value for ruminants has been calculated according to the formula:

$$FU/100 \text{ kg dry matter} = 81.9 + (\%\text{raw protein} \times 1.3) - (\%\text{fibre} \times 1.4 + (\%\text{water} + \%\text{sand} \times 0.8))$$

This formula is approved by the Danish authorities for the calculation of fodder units in rotary dried grasses, alfalfa and clovers.

TABLE 3

| Content of sugar and starch in g kg⁻¹ organic dry matter in fresh and dried quinoa at different crop ages (in % of Light Hydrolyzable Carbohydrates). | | | | |
|---|---|---|---|---|
| **Sample treat.:** | **FRESH** | | **DRIED** | |
| **Dried quinoa:** | **sugar** | **starch** | **sugar** | **starch** |
| **Crop age 9** | 112.6 (95) | 5.9 (5) | 45.3 (84) | 8.4 (16) |
| **Crop age 11** | 92.4 (67) | 44.7 (33) | 70.2 (65) | 37.9 (35) |
| **Crop age 13** | 80.4 (54) | 69.1 (46) | 70.1 (44) | 89.4 (56) |

TABLE 4

| Content of CF, CC, NDF, ADF and SWC in g kg⁻¹ organic matter in quinoa, grass, yellow lupin, winter vetch and clover. | | | | | |
|---|---|---|---|---|---|
| OBJECT: | CF[1] | CC[2] | NDF[3] | ADF[4] | SWC[5] |
| Crop age 9 (quinoa) | 203.0 | 502.0 | 498.0 | 327.0 | 171.0 |
| Crop age 11 (quinoa) | 267.0 | 565.0 | 435.0 | 303.0 | 132.0 |
| Crop age 13 (quinoa) | 278.0 | 550.0 | 450.0 | 286.0 | 164.0 |
| Grass | 296.0 | 393.0 | 607.0 | 334.0 | 273.0 |
| Yellow lupin | 299.0 | 479.0 | 521.0 | 383.0 | 138.0 |
| Winter vetch | 316.0 | 531.0 | 469.0 | 354.0 | 94.5 |
| Clover | 217.0 | 547.0 | 453.0 | 297.0 | 156.0 |

[1] CF (crude fibre);
[2] CC (cell content);
[3] NDF (neutral detergent fibre);
[4] APE (acid detergent fibre);
[5] SWC (soluble wall content)

As seen in Table 5, quinoa has a lower range than other products to produce 1 fodder unit (FU).

It is also important to bear in mind that this genotype of quinoa has only been exposed to a natural selection. A breeding and selection program for green fodder production in quinoa would probably improve this value further.

**TABLE 5: Comparison of the feeding value between the Quinoa and other dried crops (±S.D.).**

| DRIED ITEMS: | POULTRY<br>MJ ME kg$^{-1}$ DM | RUMINANTS<br>kg DM to 1 FU |
|---|---|---|
| **Crop age 9** | 5.25 ± 0.3 | 1.54 |
| **Crop age 11** | 6.66 ± 0.6 | 1.52 |
| **Crop age 13** | 6.52 ± 0.4 | 1.57 |
| M. sativa 17<br>weight-% prot.    D | 5.02 | 1.38-1.72 |
| M. sativa 20<br>weight-% prot.    R | 6.69 | |
| Green meal 17<br>weight-% prot.    Y | 3.22-4.00 | 1.36-1.82 |

EXAMPLE 3.

The dried plant material of Example 2 was tested in a *in vivo* evaluation in sheep (EU-standardized). The *in vivo* evaluation in sheep gave an accurate picture of the feeding value of the dried fodder product (Table 6). Sheep were fed a diet consisting of an experimental fodder and a supplementary fodder in the form of hay. Thus, each animal received 250 g DM day$^{-1}$ of the supplementary fodder plus 725 g DM day$^{-1}$ from the experimental fodder, fed as dried quinoa (Q-pellets). Each digestibility trial lasted for two weeks, and all feed of the three harvest times examined was consumed by sheep.

The faces from the animals was collected and analysed with respect to content of protein, fat, carbohydrates e.c.t. The digestible energy DE was calculated as the difference of the energy intake and the energy output. The metabolizable energy ME, the net energy NE and the FUs was calculated according to normal standard using the formula listed in "tabeller over foderstoffers sammensætning m.m. Kvæg-Svin" by Preben E Andersen and Arnold Just. Printed by DSR Forlag, The Royal Veterinary- and Agricultural University Copenhagen, 1990. pp 1-87.

Gross energy (GE) is the total energy measured by burning of the feeding stuff.

Digestible energy (DE) is the energy obtained from the feeding stuff. DE is measured by burning of the faeces and deduct the result from GE.

As seen in Table 6, the analytical work provided us with the information on the feeding value of the dried quinoa product.

TABLE 6

| Digestibility coefficients (*in vivo*) and feeding value (*in vivo*) of dried whole crop of quinoa (Q-pellets). | | | | | | | | |
|---|---|---|---|---|---|---|---|---|
| **HARVEST TIME:** | **CROP AGE 9** | | **CROP AGE 11** | | **CROP AGE 13** | | **MEAN±S.D.** | |
| Digestibility coeff.: | | | | | | | | |
| Raw protein | 70.4 | | 76.4 | | 75.7 | | 74.2 ± 2.7 | |
| Raw fat | 65.0 | | 61.7 | | 59.4 | | 62.0 ± 2.3 | |
| Raw carbohydrates | 61.3 | | 58.1 | | 59.9 | | 59.8 ± 1.3 | |
| Fibre | 51.5 | | 33.0 | | 38.8 | | 41.1 ± 7.7 | |
| Nitrogen Free Ex.solids | 67.5 | | 71.9 | | 71.6 | | 70.3 ± 2.0 | |
| Organic Dry Matter | 63.3 | | 61.9 | | 62.7 | | 62.6 ± 0.6 | |
| Energy in MJ pr. kg DM/ODM | DM[1] | ODM[1] | DM[1] | ODM[1] | DM[1] | ODM[1] | DM[1] | ODM[1] |
| Gross Energy | 17.2 | 20.1 | 17.7 | 20.5 | 17.6 | 20.1 | 17.5±0.20 | 20.2±0.19 |
| Digestible Energy | 10.7 | 12.4 | 10.6 | 12.2 | 10.7 | 12.2 | 10.7±0.05 | 13.3±0.09 |
| Metabolizable Energy[2] | 8.8 | 10.2 | 8.7 | 10.0 | 8.8 | 10.0 | 8.8±0.05 | 10.1±0.09 |
| Net Energy[3] | 4.6 | 5.5 | 4.7 | 5.4 | 4.8 | 5.4 | 4.7±0.10 | 5.4±0.05 |
| $FU_C$ pr. kg | 0.59 | 0.69 | 0.60 | 0.69 | 0.61 | 0.69 | 0.60±0.10 | 0.69±0.00 |
| Unit pr. kg DM/ODM | DM[1] | ODM[1] | DM[1] | ODM[1] | DM[1] | ODM[1] | DM[1] | ODM[1] |
| $FU_C$ | 1.69 | 1.45 | 1.67 | 1.45 | 1.64 | 1.45 | 1.67±0.02 | 1.45±0.01 |

[1] DM (dry matter) and ODM (organic dry matter)
[2] ME=DEx0.82;
[3] NE=$FU_C$x7.87MJ

Bearing Table 6 in mind, it is surprising that the manufactured product during the 4 weeks examined maintains the same high level of digestible energy. Speaking harvest it brings, therefore, the crop a very large elasticity which is an important feature for the industry, because this may lead to an improved utilisation of the existing equipment. Also the digestibility coefficients are less influenced by the harvest time. They are all at an acceptable level when compared to comparable dried products.

EXAMPLE 4.

The heat treated plant material from Example 2 was tested in 1990 in a toxicological test. At the same time the quality of quinoa proteins was judged.
8 male albino rats, each having a weight of about 90 g was fed with a fodder consisting of a preserved feeding stuff according to the invention comprising by weight

37.69% of the pellets from example 2
4.91% casein
5.24% mineral/vitamin mixture
52.16% N-free mixture

The N-free mixture was composed from about 80.4% corn starch, 5.3% soya oil, 5.3% cellulose and 9.0% sucrose.
The rats had free access to the fodder as well as to demineralised water.
After 22 days the experiment was terminated.

The results of the feeding test showed that for each 100 g quinoa protein applied the rats digested 83.8 g (±1.4). whereas 69.5 g (±1.0) were deposited. This means that the true digestibility (TD) of quinoa proteins is 83.8% and the net protein utilisation (NPU) is 69.5%. On the basis of these results the biological value (BV) was estimated (NPU x 100/TD=BV) to be 82.9 g (±0.9). The result showed that 82.9% of the deposited protein had been consumed by the body. The BV value in quinoa is much better than the BV value known from soybeans which have a BV at 71.6%.

After the above feeding test the rats were dissected. The result of the toxicological test was that no alterations could be observed in either the spleen, liver or the mucous membrane of the gut in the eight rats examined.

EXAMPLE 5.

The pellets produced in Example 2 were subjected to a foam test in order to detect the presence of any saponins.

5 samples of 0.5 g of pellet from the 9 week old crops, the 11 week old crops and the 13 weeks old crops, respectively, from Example 2 was crushed and poured into 10 ml demineralised and ion exchanged water and was shacked for 1 minute. Any presence of saponins would create a small pored cell foam on the surface. No foam was detected on the surface.

A comparative test was carried out on 5 samples of crushed greenmatter from Example 1 which had not been dried and heat treated. 0.5 g fresh crushed greenmatter was poured into 10 ml demineralised and ion exchanged water and was shacked for 1 minute. It could be observed that there was a foam layer of between 2 and 5 mm.

From this result it could be concluded that the saponins present in the fresh greenmatter had been eliminated in the heat treated greenmatter.

EXAMPLE 6.

The pellets produced in Example 2 were subjected to a thin layer chromatography (TLC) test in order to detect the presence of any saponins.

No saponin could be detected which means that less than 1 ppm was present in the pellets.

EXAMPLE 7.

Fresh quinoa plants were comminuted and ensiled in stacks in the field. The ensilage was offered to 18 heads of young cattle in the age between 18 and 24 months. From the first day the animals refused to eat the new feed. New fresh ensilage was offered to them on the following 5 days, but with the same result.

The experiment was terminated after 5 days. Then the animals were given their usual feed. After the animals had been given their usual feed for a period of 14 days, the 18 animals were offered quinoa pellets produced as described in example 2. 17 of the animals took the pellets from the first day. The last animal took the pellets from day 2. The refusal to eat the ensilage was ascribed to the content of saponins.

**Claims**

1.  Preserved feeding stuff comprising dried greenmatter of the vegetative plant parts of the species Chenopodium quinoa, wherein the vegetative plant parts of the species Chenopodium quinoa have been heat-treated prior, under or after the drying, to a temperature above 700 °C, preferably above 800 °C and more preferably to a temperature of between 800 and 1200 °C and most preferably to a temperature of between 800 and 1000 °C.

2.  Preserved feeding stuff according to claim 1, comprising at least 10%, preferably at least 30%, more preferably at least 55% and even more preferably at least 80% by weight of dried greenmatter of the vegetative plant parts of the species Chenopodium quinoa.

3.  Preserved feeding stuff according to claim 1 or 2, wherein the dried greenmatter has a water content of less than 20%, preferably less than 15% and more preferably less than 10% by weight.

4.  Preserved feeding stuff according to claims 1, 2 or 3, wherein the vegetative plant parts of the species Chenopodium quinoa have been heat-treated for an average period of between 0.1 to 30 seconds, preferably between 0.1 and 4 seconds, more preferably between 0.1 and 3 seconds and most preferably between 0.1 and 2.5 seconds.

5.  Preserved feeding stuff according to any of the claims 1-4 in the form of comminuted green matter, preferably in the form of flour or pelletized flour.

6. Preserved feeding stuff according to any of the claims 1-5 in the form of briquettes or cops.

7. Preserved feeding stuff according to any of the claims 1-6, wherein the dried greenmatter is of Chenopodium quinoa harvested in the period from the stage of pre-flowering to the state of seed-setting.

8. Method of preparing a preserved food stuff, comprising the step of

   a) growing a plant of the species Chenopodium quinoa,

   b) harvesting the plant,

   c) drying the vegetative plant parts of the plant to obtain a dried greenmatter,
   wherein the vegetative plant parts are heat treated prior to under or after the step of drying, preferably heat treated to a temperature above 700 °C, preferably above 800 °C and more preferably to a temperature of between 800 and 1200 °C and most preferably to a temperature of between 800 and 1000 °C.

9. Method according to claim 8, wherein the species Chenopodium quinoa is grown in a row distance of between 10 and 50 cm, preferably between 20 and 40 cm, more preferably between 23 and 29 and most preferably about 26 cm.

10. Method according to claim 8 or 9, wherein the species Chenopodium quinoa is grown at a plant density in the range of 80 to 180, preferably in the range of 115 to 140 plants per $m^2$.

11. Method according to any of the claims 8, 9 or 10, wherein the Chenopodium quinoa is harvested at an age of between 8 and 16 weeks from germination ,preferably between the state of pre- flowering to the state of seed-setting.

12. Method according to any of the claims 8-11, wherein the vegetative plant parts are comminuted prior or under the step of drying, preferably comminuted by crushing or slicing to pieces having an average size of less than 70 mm, preferably between 1 and 50 mm, more preferably between 1 and 10 mm and most preferably between 3 and 7 mm, prior to the step of drying.

13. Method according to claims 8-12, wherein the vegetative plant parts are heat treated to a temperature of between 700 and 1200 °C for an average period of between 0.1 to 30 seconds, preferably between 0.1 and 4 seconds, more preferably between 0.1 and 3 seconds and most preferably between 0.1 and 2.5 seconds.

14. Method according to any of the claims 8-13, wherein the vegetative plant parts are partly dewatered by mechanical means prior to the drying step.

15. Method according to any of the claims 8-14, wherein the vegetative plant parts are dried in a drum drier.

16. Method according to claim 15, wherein the vegetative plant parts are dried with flue gas at an average retention time in the drum drier at 5 minutes or less.

17. Use of a preserved feeding stuff according to any of the claims 1-7 as a feeding stuff for ruminants particularly as a feeding stuff for cattle.

18. Use of a preserved feeding stuff according to any of the claims 1-7 as a feeding stuff for monogastric mammals particularly as a feeding stuff for poultrys, rodents or pigs.

19. A preserved food stuff obtainable according to any of the claims 8-16.

**Patentansprüche**

1. Konserviertes Futter/Lebensmittel, enthaltend grünes Material der vegetativen Pflanzenteile der Spezies Chenopodium quinoa, wobei die vegetativen Pflanzenteile der Spezies Chenopodium quinoa vor, während oder nach dem Trocknen bei einer Temperatur von mehr als 700°C, vorzugsweise mehr als 800 °C und besonders bevorzugt bei einer Temperatur zwischen 800 und 1200 °C und insbesondere bevorzugt bei einer Temperatur zwischen 800 und 1000°C wärmebehandelt worden sind.

2. Konserviertes Futter/Lebensmittel nach Anspruch 1, umfassend bezogen auf das Gewicht zumindest 10 %, vorzugsweise zumindest 30%, besonders bevorzugt zumindest 55 % und insbesondere bevorzugt zumindest 80 % an getrocknetem grünen Material der vegetativen Pflanzenteile der Spezies Chenopodium quinoa.

3. Konserviertes Futter/Lebensmittel nach Anspruch 1 oder 2, wobei das getrocknete grüne Material bezogen auf das Gewicht einen Wassergehalt von weniger als 20%, vorzugsweise weniger als 15 %, und besonders bevorzugt weniger als 10 % aufweist.

4. Konserviertes Futter/Lebensmittel nach Anspruch 1, 2 oder 3, wobei die vegetativen Pflanzenteile der Spezies Chenopodium quinoa für eine mittlere Zeitdauer zwischen 0,1 und 30 Sekunden, vorzugsweise zwischen 0,1 und 4 Sekunden, besonders bevorzugt zwischen 0,1 und 3 Sekunden und insbesondere bevorzugt zwischen 0,1 und 2,5 Sekunden wärmebehandelt worden sind.

5. Konserviertes Futter/Lebensmittel nach einem der Ansprüche 1 bis 4 in Form von zerkleinertem grünen Material, vorzugsweise in Form von Mehl oder pelletisiertem Mehl.

6. Konserviertes Futter/Lebensmittel nach einem der Ansprüche 1 bis 5 in der Form von Pellets oder Körnern.

7. Konserviertes Futter/Lebensmittel nach einem der Ansprüche 1 bis 6, wobei das getrocknete grüne Material aus Chenopodium quinoa gewonnen ist, die im Zustand vor dem Beginn der Blüte bis zum Zustand des Fruchtansatz geerntet ist.

8. Verfahren zur Herstellung eines konservierten Futters/Lebensmittels, umfassend die Schritte:

   a) Aufziehen einer Pflanze der Spezies Chenopodium quinoa,
   b) Ernten der Pflanze,
   c) Trocknen der vegetativen Pflanzenteile der Pflanze um getrocknetes grünes Material zu erhalten,
   wobei die vegetativen Pflanzenteile vor, während oder nach dem Schritt des Trocknens wärmebehandelt werden, vorzugsweise bei einer Temperatur oberhalb von 700 °C, insbesondere oberhalb von 800 °C, besonders bevorzugt bei einer Temperatur zwischen 800 und 1200 °C und insbesondere bevorzugt bei einer Temperatur zwischen 800 und 1000 °C wärmebehandelt werden.

9. Verfahren nach Anspruch 8, wobei die Spezies Chenopodium quinoa in einem Reihenabstand zwischen 10 und 50 cm, vorzugsweise zwischen 20 und 40 cm, besonders bevorzugt zwischen 23 und 29 cm und insbesondere bevorzugt von ungefähr 26 cm aufgezogen wird.

10. Verfahren nach Anspruch 8 oder 9, wobei die Spezies Chenopodium quinoa bei einer Pflanzendichte im Bereich von 80 bis 180, vorzugsweise im Bereich von 115 bis 140 Pflanzen pro m$^2$ aufgezogen wird.

11. Verfahren nach einem der Ansprüche 8, 9 oder 10, wobei das Chenopodium quinoa in einem Alter zwischen 8 und 16 Monaten nach dem Keimen geerntet wird, vorzugsweise im Zustand vor dem Beginn der Blüte bis zum Zustand des Fruchtansatzes.

12. Verfahren nach einem der Ansprüche 8 bis 11, wobei die vegetativen Pflanzenteile vor oder während der Schritte des Trocknens zerkleinert werden, vorzugsweise vor dem Trockenschritt zerkleinert werden durch Zerbrechen oder Zerschneiden in Stücke mit einer durchschnittlichen Größe von weniger als 70 mm, vorzugsweise zwischen 1 und 50 mm, besonders bevorzugt zwischen 1 und 10 mm und insbesondere bevorzugt zwischen 3 und 7 mm.

13. Verfahren nach einem der Ansprüche 8 bis 12, wobei die vegetativen Pflanzenteile bei einer Temperatur zwischen 700 und 1200 °C für eine mittlere Zeit von 0,1 bis 30 Sekunden, vorzugsweise zwischen 0,1 und 4 Sekunden, besonders bevorzugt zwischen 0,1 und 3 Sekunden und insbesondere bevorzugt zwischen 0,1 und 2,5 Sekunden wärmebehandelt werden.

14. Verfahren nach einem der Ansprüche 8 bis 13, wobei die vegetativen Pflanzenteile vor dem Trockenschritt mit mechanischen Mitteln teilweise entwässert werden.

15. Verfahren nach einem der Ansprüche 8 bis 14, wobei die vegetativen Pflanzenteile in einem Trommeltrockner getrocknet werden.

16. Verfahren nach Anspruch 15, wobei die vegetativen Pflanzenteile mit Rauchgas bei einer mittleren Verweilzeit im Trommeltrockner von 5 Minuten oder weniger getrocknet werden.

17. Verwendung eines konservierten Futters/Lebensmittels nach einem der Ansprüche 1 bis 7 als Futtermittel für Wiederkäuer, insbesondere als Futtermittel für Rinder.

18. Verwendung eines konservierten Futters/Lebensmittels nach einem der Ansprüche 1 bis 7 als Futtermittel für monogastrische Säugetiere, insbesondere als Futtermittel für Geflügel, Nagetiere oder Schweine.

19. Konserviertes Futter/Lebensmittel, erhältlich nach einem der Ansprüche 8 bis 16.

**Revendications**

1. Produit fourrager en conserve comprenant de la matière verte séchée issue de parties végétatives de plantes appartenant à l'espèce <u>Chenopodium</u> <u>quinoa</u>, dans lequel les parties végétatives des plantes appartenant a l'espèce <u>Chenopodium quinoa</u> ont reçu un traitement thermique avant, pendant ou après le séchage, à une température supérieure à 700°C, de préférence supérieure à 800°C, en particulier à une température comprise entre 800 et 1200°C et tout spécialement à une température comprise entre 800 et 1000°C.

2. Produit fourrager en conserve selon la revendication 1, comprenant au moins 10%, de préférence au moins 30%, mieux encore au moins 55% et tout spécialement au moins 80% en poids de matière verte séchée issue des parties végétatives de plantes appartenant à l'espèce <u>Chenopodium</u> <u>quinoa</u>.

3. Produit fourrager en conserve selon la revendication 1 ou 2, dans lequel la matière verte séchée présente une teneur en eau inférieure à 20%, de préférence inférieure à 15% et en particulier inférieure à 10% en poids.

4. Produit fourrager en conserve selon les revendications 1, 2 ou 3, dans lequel les parties végétatives de plantes appartenant à l'espèce <u>Chenopodium</u> <u>quinoa</u> ont reçu un traitement thermique pour une durée moyenne entre 0,1 et 30 secondes, de préférence entre 0,1 et 4 secondes, mieux encore entre 0,1 et 3 secondes et tout spécialement entre 0,1 et 2,5 secondes.

5. Produit fourrager en conserve selon l'une quelconque des revendications 1 à 4, sous forme de matière verte hachée, de préférence sous forme de farine ou de farine en granulés.

6. Produit fourrager en conserve selon l'une quelconque des revendications 1 à 5, sous forme de briquettes ou de canettes.

7. Produit fourrager en conserve selon l'une quelconque des revendications 1 à 6, dans lequel la matière verte est issue de <u>Chenopodium quinoa</u> récolté à une période allant du stade de préfloraison au stade de chute des semences.

8. Procédé de préparation d'un produit alimentaire en conserve, comprenant les étapes de

    a) mise en culture d'une plante appartenant à l'espèce <u>Chenopodium</u> <u>quinoa</u>,
    b) récolte de la plante,
    c) séchage des parties végétatives de la plante en vue d'obtenir de la matière verte séchée,
    dans lequel les parties végétatives de la plante font l'objet d'un traitement thermique avant, pendant ou après l'étape de séchage, de préférence à une température supérieure à 700°C, de préférence supérieure à 800°C, en particulier à une température comprise entre 800 et 1200°C et tout spécialement à une température comprise entre 800 et 1000°C.

9. Procédé selon la revendication 8, dans lequel l'espèce <u>Chenopodium quinoa</u> est cultivée en rangées distantes entre 10 et 50 cm, de préférence entre 20 et 40 cm, en particulier entre 23 et 29 et tout spécialement d'environ 26 cm.

**10.** Procédé selon la revendication 8 ou 9, dans lequel l'espèce <u>Chenopodium</u> <u>quinoa</u> est cultivée à une densité végétale comprise dans la gamme de 80 à 180, de préférence de 115 à 140 plantes par m$^2$.

**11.** Procédé selon l'une quelconque des revendications 8, 9 ou 10, dans lequel <u>Chenopodium</u> <u>quinoa</u> est récolté à un âge entre 8 et 16 semaines à compter de la germination, de préférence entre le stade de préfloraison et le stade de chute des semences.

**12.** Procédé selon l'une quelconque des revendications 8 à 11, dans lequel les parties végétatives des plantes sont hachées avant ou pendant l'étape de séchage, de préférence hachées par broyage ou tranchage en fragments mesurant moins de 70 mm de taille en moyenne, de préférence entre 1 et 10 mm et tout spécialement entre 3 et 7 mm, avant l'étape de séchage.

**13.** Procédé selon les revendications 8 à 12, dans lequel les parties végétatives des plantes sont soumises à un traitement thermique à une température comprise entre 700 et 1200°C pour une durée moyenne entre 0,1 et 30 secondes, de préférence entre 0,1 et 4 secondes, mieux encore entre 0,1 et 3 secondes et tout spécialement entre 0,1 et 2,5 secondes.

**14.** Procédé selon l'une quelconque des revendications 8 à 13, dans lequel les parties végétatives des plantes sont en partie égouttées par des moyens mécaniques préalablement à l'étape de séchage.

**15.** Procédé selon l'une quelconque des revendications 8 à 14, dans lequel les parties végétatives des plantes sont séchées dans un séchoir à tambour.

**16.** Procédé selon la revendication 15, dans lequel les parties végétatives des plantes sont séchées avec du gaz de fumées moyennant un temps de rétention moyen dans le séchoir à tambour de 5 minutes ou moins.

**17.** Utilisation d'un produit fourrager en conserve selon l'une quelconque des revendications 1 à 7, comme produit fourrager pour ruminants, en particulier comme produit fourrager pour bétail.

**18.** Utilisation d'un produit fourrager en conserve selon l'une quelconque des revendications 1 à 7, comme produit fourrager pour mammifères monogastriques, en particulier comme produit fourrager pour volaille, rongeurs ou porcins.

**19.** Produit alimentaire en conserve pouvant être obtenu selon l'une quelconque des revendications 8 à 16.

☞Raw article in☜

| Feeder table | (1) |

| Pre-treatment | (5) |

| Screw feeder | (9) |

| Rotary drier | (10) |

| Main cyclone | (17) |

| Main lock | (16) |

| Sandscrew | (20) |

**CIRCULATION OF FLOUR**

| Mills | (15+21) |

(20) | Dust screw |

| Flour suction | (23+29) |

(45) | Feeder screw |

| Flour cyclons | (24+28) |

(34) | Floor chain |

| Flour locks | (25+27) |

(40) | Flour silo |

| Diescrew | (26) |

**CIRCULATION OF FLOUR**

| Dose screw | (33+35) |

| Mixer | (33+35) |

| Screw feeder | (33+35) |

| Squeezer | (33+35) |

| Band I + II | (46) |

| Band pass filter | (47) |

| Band cooler | (50) |

| Weight | (51) |

| Screw | (52) |

| Stacker | (53) |

| Band pass filter | (54) |

| Band conveyor | (54) |

| Band conveyor | (57) |

| Band to store | (58) |

| Finished article out |

Fig. 1.

EP 0 768 040 B1

Fig.2.

17